# EUROPEAN PATENT SPECIFICATION

(11) **EP 4 155 210 B1**
(45) Date of publication and mention of the grant of the patent: **29.05.2024**
(21) Application number: 21382866.8
(22) Date of filing: 28.09.2021
(51) Int. Cl.: B64D 27/08, B64D 27/14, B64D 27/20

(54) **AIRCRAFT WITH A COMBUSTION ENGINE HAVING AN EXHAUST AHEAD OF ITS AIR INTAKE**
FLUGZEUG MIT EINER BRENNKRAFTMASCHINE MIT EINEM AUSPUFF VOR SEINEM LUFTEINLASS
AÉRONEF ÉQUIPÉ D'UN MOTEUR À COMBUSTION INTERNE AYANT UN ÉCHAPPEMENT EN AVANT DE SON ADMISSION D'AIR

(43) Date of publication of application: 29.03.2023
(73) Proprietor: Airbus Operations, S.L.U., 28906 Getafe (ES)
(72) Inventor: FERNANDEZ LOPEZ, Pio, 28906 Getafe (ES); CHIABRANDO, Marcos, 28906 Getafe (ES); RODRIGUEZ HIDALGO, Alvaro, 28906 Getafe (ES)

(56) References cited:
- EP-A2- 2 208 669
- US-A1- 2012 151 933
- US-A1- 2021 206 502

## Description

The invention relates to aircrafts with a combustion engine in the fuselage. More particularly the invention relates to commercial aircrafts with an auxiliary power unit in the rear fuselage, and their air intake and exhaust configurations.

In current commercial aircraft, the exhaust gases from the engines are always exhausted towards the rear of the aircraft. This is also the case of the auxiliary power unit engine, traditionally located in the rear fuselage, which have an exhaust towards or at the very rear end of the rear fuselage. The exhaust gases of an engine are always exhausted towards the rear of the aircraft, in particular rearward from the air intake of said engine, in order to avoid that the engine intakes exhaust gases instead of or mixed with fresh air.

Although this may work at zero or small air speeds, when the engine is working in flight conditions, there are occurrences of reverse flow effect which unexpectedly brings some exhaust gases back into the air intake. This may impact the efficiency of the engine, as well as it life time, while also increasing the maintenance costs of the aircraft.

Also the current design of commercial aircrafts with an open rear end for the auxiliary power unit increases the aircraft's drag in flight conditions.

Carrying an engine which remains switched off during most or all of a flight is not optimal in terms of fuel-burn. In order to improve the energy efficiency of commercial aircraft, efforts are made to use the auxiliary power unit as source of energy during the whole flight, thereby reducing the requirements of the main engines energy production, their size and consequently their weight. Such change may thus have a high impact on energy consumption of commercial aircrafts. However, challenges must be met to make it possible to use an auxiliary power unit during the whole flight, and in particular at high altitudes and high air speeds.

Documents US2021206502 and US2012151933 both relate to intake and exhaust of engines in an aircraft. Document US2010181435 relates to a door assembly for laminar flow control system.

The invention aims to provide an aircraft with a high aerodynamic efficiency.

The invention aims to provide an aircraft with a high engine, and in particular a high auxiliary power unit, efficiency.

The invention aims to provide an aircraft with an auxiliary power unit that may be used during different phases of the aircraft's flights.

The invention proposes an aircraft comprising:
- a fuselage extending along a longitudinal axis from a front end to a rear end, said fuselage comprising a skin,
- an engine:
   - comprising an air intake forming an opening in the skin,
   - comprising an exhaust forming an opening in the skin,
   - located in a rear fuselage section of the fuselage,
characterized in that the exhaust is situated ahead of the air intake along the longitudinal direction.

The aircraft has a normal direction of flight, and in the whole text, terms such as front, fore, forward, ahead, behind, backward, rear or aft are to be understood along a longitudinal axis of this aircraft according to this normal direction of flight. For example, the cockpit is situated at the fore of the aircraft, while a stabilizer is at the aft of the aircraft, such that the cockpit is situated ahead of the stabilizer.

In the invention, the rear fuselage has a front end, which is toward the front end of the aircraft, and a rear end which is towards the rear end of the aircraft. In some embodiments, the rear end of the rear fuselage forms the rear end of the fuselage and/or of the aircraft.

The engine being a combustion engine, it intakes air from the atmosphere for the combustion and exhaust gases resulting from the combustion. The air intake opening on the fuselage' skin is connected to the engine through an intake conduct. Similarly the engine is connected to the exhaust opening on the fuselage' skin through an exhaust conduct.

In the invention, the exhaust is situated ahead of the air intake. Said in another way, the exhaust is closer to the front end of the rear fuselage section than the air intake. One may also say that the distance between the air intake and the rear end of the rear fuselage section is smaller than the distance between the exhaust and the rear end of the rear fuselage section.

Although it may seem unnatural to place the exhaust more towards the front than the air intake because of reentry of exhaust gas into the air intake, the inventors have determined that the pressure profiles around a rear fuselage section of the aircraft, renders this configuration possible and beneficial. Indeed the inventors have determined that during flight, the dynamic pressure around the rear fuselage of an aircraft is higher at the very rear end of the rear fuselage section than along its sides. Thereby, the inventors have determined that placing the air intake towards the rear end of the rear fuselage section benefits the air circulation from the atmosphere towards the engine. Similarly, the pressure being lower on the lateral sides of the rear fuselage section, ahead of its rear end, placing the exhaust in such areas facilitates the exhaust gases to be exhausted towards the atmosphere.

Moreover, other characteristics detailed in the below description may further enhance such configuration.

A vector, called exhaust vector, between a predetermined point on the longitudinal axis of the aircraft and a point of the exhaust opening forms a segregating angle of at least 85 degrees with a vector, called intake vector, between said predetermined point on the longitudinal axis of the aircraft and a point of the air intake opening.

This characteristic ensures that the air intake and the exhaust are at sufficient longitudinal distance and/or radial distance to ensure that the exhaust gases do not reenter the air intake.

Beneficially the exhaust vector and the intake vector form a segregating angle of at least 90 degrees, beneficially at least 120 degrees, and in some instance 180 degrees.

A first plane, called exhaust plane, comprising the longitudinal axis of the aircraft and a point of the exhaust opening, and a second plane, called intake plane, comprising the longitudinal axis of the aircraft and a point of the air intake opening, form a segregating angle of at least 85 degrees with each other.

The exhaust plane may contain the exhaust vector, and the intake plane may contain the intake vector.

At 90 degrees or more between the exhaust vector and the intake vector, the air intake may be on a lateral side of the fuselage while the exhaust in located on another lateral side of the fuselage. For example the air intake may be on a port side (or inversely on a starboard side), and the exhaust on a starboard side (respectively a port side).

The air intake and the exhaust may be separated from each other by a physical separator protruding from the fuselage. Thereby, a flow of exhaust gases from the exhaust may not reach the air intake because the physical separator separates its flow towards the rear end of the aircraft from a flow of fresh air towards the air intake.

In particular, in embodiments of the invention, the air intake and the exhaust may be radially separated from each other in the rear fuselage section by a horizontal tail plane or a vertical tail plane of the aircraft. The horizontal tail plane or the vertical tail plane may thus form a physical separator between the air intake and the exhaust. Each of the air intake and the exhaust are separated from the horizontal tail plane or the vertical tail plane by a predetermined distance adapted to minimize any disturbance in the flow of air around the horizontal tail plane or the vertical tail plane, as well as to avoid damaging the horizontal tail plane or the vertical tail plane with hot exhaust gases.

Nonetheless, in some embodiments, both the air intake and the exhaust are situated in a fuselage portion aft of the horizontal tail plane and the vertical tail plane of the aircraft.

The air intake may open on a lateral side of the rear fuselage section.

The air intake opening may be on a lateral side of the rear fuselage section. The air intake opening may be comprised between two planes comprising a longitudinal axis of the aircraft and forming respectively an angle of +50 degrees and -50 degrees, and more particularly between +30 degrees and -30 degrees, with said longitudinal axis of the aircraft. The air intake opening may be on a port or starboard side of the rear fuselage section.

The air intake may comprise a scoop adapted to divert air flowing along the fuselage during flight towards the intake conduct. The scoop may be adapted to at least partially close the air intake opening when the engine is switched off.

Alternatively or in combination, the air intake may comprise a flap to at least partially close the air intake opening when the engine is switched off. Said flap may open towards the inside of the intake conduct.

The exhaust may open on an upper side or a lower side of the rear fuselage section.

The exhaust opening may be on an upper side or a lower side of the rear fuselage section. The exhaust opening may be comprised between two planes comprising a longitudinal axis of the aircraft and forming respectively an angle of +50 degrees and -50 degrees, and more particularly between +30 degrees and -30 degrees, with the vertical.

With an air intake is on a lateral side of the rear fuselage section, the exhaust opening being on the upper side or lower side ensures that the exhaust gases will not mix with the fresh air drawn by the air intake.

The exhaust may comprise vanes adapted to guide exhaust gases towards the atmosphere.

The exhaust may comprise vanes adapted to facilitate the exhaust gases to flow towards the atmosphere during flight. The vanes may also direct the exhaust gases away from the air intake.

The engine may be an auxiliary power unit.

In commercial aircrafts, auxiliary power unit are combustion engine situated in the rear fuselage section. They provide power to the aircraft while on-ground, for the start of the main engines, as well as a source of emergency power in case of failure of the main engines. However, in order to optimize the energy production on-board with regards to the weight that such engine represent and that the aircraft must carry, it is foreseen that the auxiliary power unit may also be in use during nominal flight conditions.

The air intake and exhaust configuration proposed here, is particularly beneficial for such engines, because the pressure profile around the rear end fuselage in flight benefits the intake of fresh air and the exhaust of exhaust gases. The energy consumption of the engine is thereby improved.

The auxiliary power unit has a longitudinal axis and this longitudinal axis may form a tilting angle of at least 10 degrees with a longitudinal axis of the aircraft.

Such inclination of the auxiliary power unit is particularly beneficial with an exhaust on an upper side when the exhaust side of the tilted engine is oriented upward, or on a lower side of the fuselage when the exhaust side of the tilted engine is oriented downward.

The front end of the auxiliary power unit may be placed higher than a rear end of the auxiliary power unit.

While most auxiliary power unit are inclined with their read end higher than their front end, the invention allows for an auxiliary power unit to be otherwise inclined. This is particularly beneficial with an exhaust opening on the lower side of the fuselage.

In an aircraft of the invention, the rear fuselage section rear end may be closed.

In an aircraft according to the invention, the rear end of the fuselage comprise a closed tailcone. Such configuration is particularly aerodynamically efficient. Indeed, since the rear fuselage rear end has a closed end, the air may flow with very low drag around this portion of the fuselage, and in particular the flows of air flowing around the aircraft's fuselage may rejoin with minimal vortices. According to embodiments of the invention the flight physics, the manufacturing and the design of an aircraft's tailcone may be optimized without the constraint of the APU's exhaust.

The tailcone aft end may for example have a conical shape or a concave parabolic shape.

An aircraft of the invention may comprise an intake conduct between the air intake and the engine, said intake conduct comprising at least one portion forming a U-shape.

The U-shape portion of the intake conduct allows for the first portion of the intake conduct to be oriented with a small angle compared to the direction of the air flow incoming the air intake thereby facilitating the drawing of external fresh air, while bringing the air towards the engine that may be situated ahead of the longitudinal position of the air intake along the longitudinal direction of the aircraft. The U-shape section of the intake conduct also allows the air to come in the engine on the opposite side of the air intake on the fuselage: for example if the air intake is on the port side of the fuselage, the intake conduct may lead the air towards the starboard side of the engine.

Alternatively, in other embodiment the intake conduct may be straight from the air intake opening to the engine. Such embodiments provide benefits in terms of installation volume and weight, while the aerodynamic of the air flow is impeded. In such configuration the intake conduct brings the air to the engine on the same side as that of the air intake on the fuselage.

The air intake may comprise a divergent plenum to stabilize the airflow and increase its pressure before being breathed by the engine.

The invention also extends to other possible combinations of features described in the above description and in the following description relative to the figures. In particular, the invention extends to an aircraft rear fuselage section comprising features described in relation to the aircraft.

Some specific exemplary embodiments and aspects of the prior art and the invention are described in the following description in reference to the accompanying figures.
Figure 1 is a schematic lateral view representation of a longitudinal cross-section of a rear section fuselage of an aircraft of the prior art.
Figure 2 is a schematic lateral view representation of pressures profiles around an aircraft of the prior art.
Figure 3a is a schematic top-view representation of a longitudinal cross-section of a rear section fuselage of a first embodiment according to the invention.
Figure 3b is a schematic top-view representation of a longitudinal cross-section of a rear section fuselage of a second embodiment according to the invention.
Figure 4 is a schematic lateral view representation of a longitudinal cross-section of a rear section fuselage of the first embodiment of figure 3a.
Figure 5 is a schematic lateral view representation of a longitudinal cross-section of a rear section fuselage of a third embodiment according to the invention
Figure 6 is a schematic longitudinal view of a rear section fuselage in an embodiment of the invention according to the embodiment of figure 4.
Figure 7 is a schematic representation of an aircraft according to the invention.

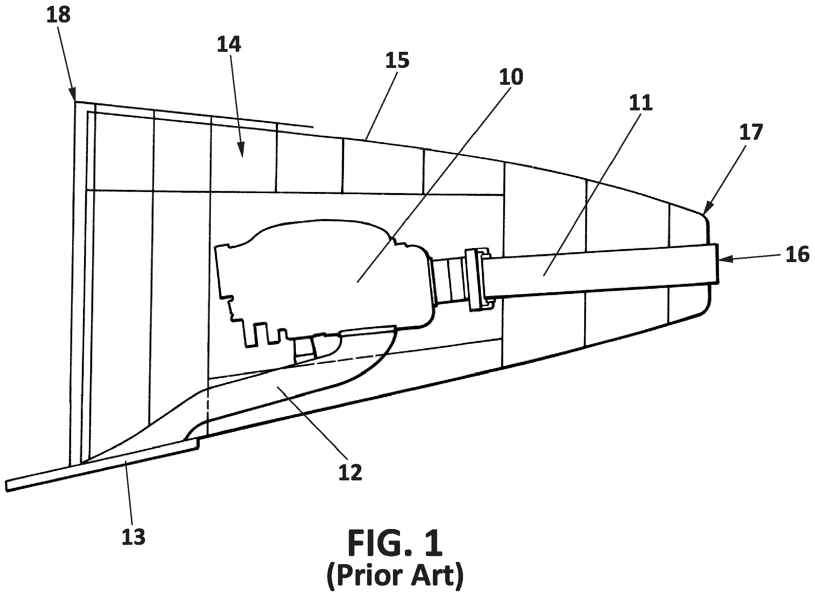

In Figure 1 a rear fuselage section of a fuselage 14 of the prior art is represented. It comprises a skin 15 defining the envelope of the fuselage. The rear fuselage section extends between a rear end 17 and a front end 18 at which it is attached with another section of the fuselage 14. The rear fuselage section hosts a combustion engine 10. The combustion engine is an auxiliary power unit (APU).

The APU 10 comprises an exhaust 16 forming an opening in the skin 15 of the fuselage 14. The exhaust is connected to the engine through an exhaust conduct 11. The exhaust 16 is situated at the rear end 17 of the rear fuselage section and forms the rear end of the aircraft. One may note that the shape of the rear end 17 is mainly determined to host the exhaust 16. The shape of the rear end 17 is not optimal in terms of aerodynamics.

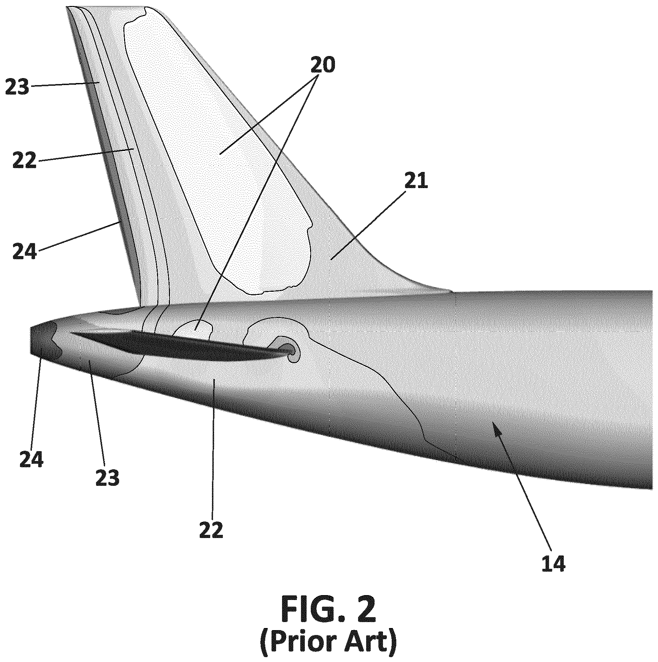

The APU 10 also comprises an air intake 13 forming an opening in the skin 15 of the fuselage 14. The air intake 13 is connected to the engine via an intake conduct 12. The air intake is located on a lower side of the aircraft's fuselage 14, towards the front of the rear fuselage section. The air intake 13 is thus far ahead of the exhaust 16 in order to avoid re-ingestion of exhaust gases by the engine 10 through the air intake 13. Nonetheless, as it will be shown in connection with figure 2, the dynamic air pressure profile around the rear fuselage section when the aircraft is in flight may provoke some exhaust gases re-ingestion by the engine 10 through the air intake 13.

Figure 2 shows a pressure profile of air in flight conditions around a rear fuselage section with its horizontal tail plane 26 and vertical tail plane 25. Each line delimits two areas with different pressure levels. A first area 20 has a lower pressure than the areas 22, which themselves have a lower pressure than the area 23. The area 23 has a lower pressure than the areas 24. The areas 24 are situated at the rear of the vertical tail plane 25 and of at the rear end of the fuselage 14. One may thus see that the pressure at the location of the air intake 13 is lower than the pressure at the exhaust 16. This not only affects the efficiency of the engine, which must burn additional fuel to compensate for this pressure difference but also, as mentioned before, can lead to exhaust gases re-ingestion by the engine 10 through the air intake 13.

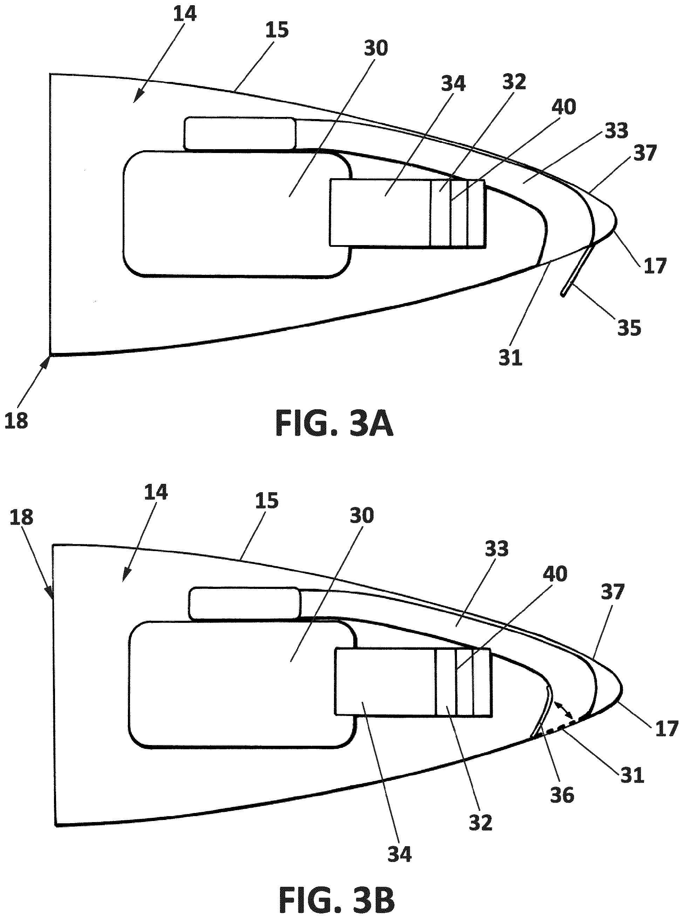

The invention, of which some exemplary embodiments are represented on figures 3 to 6, intends to solve these problems.

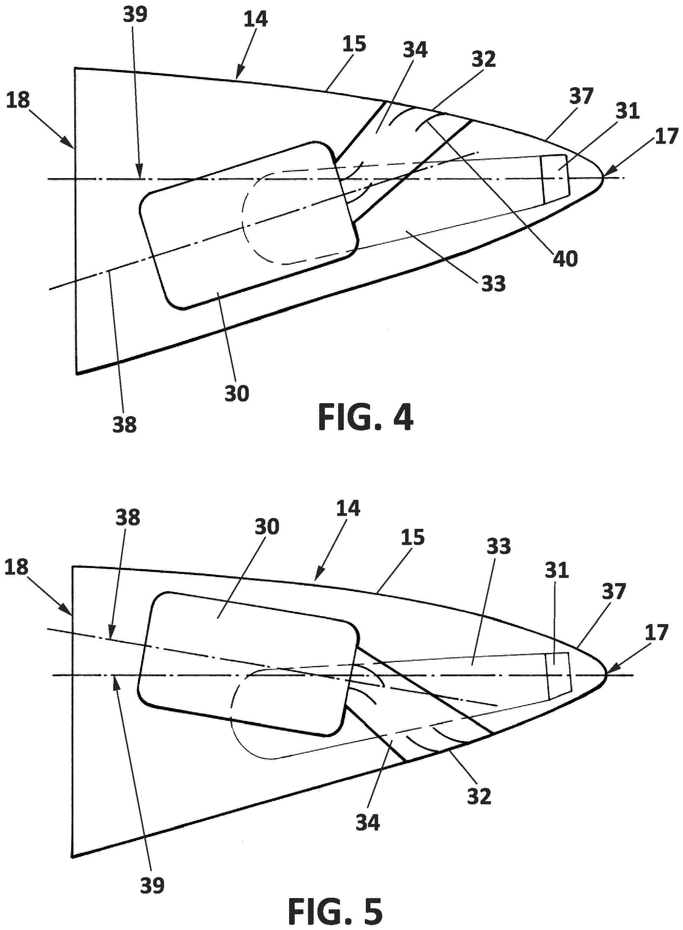

In the embodiment of figures 3a and 4, an engine 30 is installed in a rear fuselage section of an aircraft's fuselage 14.

The engine 30 comprises an air intake 31 opening on a port side of the rear fuselage section. The air intake 31 intersects with a plane comprising a longitudinal axis 39 of the aircraft. The air intake 31 is hydraulically connected to the engine by an intake conduct 33.

The air conduct is adapted for air to circulate from the air intake 31 towards the engine 30, with the engine being ahead of the air intake 31 with respect to a longitudinal direction of the aircraft. The intake conduct 33 is curved. The intake conduct 33 has a U-shape as seen on the top view of figure 3a. A first portion of the intake conduct 33 goes rearward in the fuselage from the air intake 31. A second portion of the intake conduct 33 is curved, and a third portion of the intake conduct 33 goes towards the front of the fuselage from the second curved portion. Thereby, the angle made by the first portion of the intake conduct 33 with the natural air flow direction along the fuselage just before it enters the air intake 31 is minimized and the energy and speed of this air is at least partially maintained. The energy efficiency of the engine is thus optimized.

The engine 30 also comprises an exhaust 32 opening on the upper side of the fuselage 14. The exhaust 32 intersects with a vertical plane comprising a longitudinal axis 39 of the aircraft. The exhaust 32 is hydraulically connected to the engine by an exhaust conduct 34. The air intake 31 and the exhaust 32 are therefore situated at about 90 degrees from each other around the longitudinal axis 39 of the aircraft. The exhaust 32 is longitudinally ahead of the air intake 31, such that is the exhaust 32 is more towards the front of the aircraft than the air intake 31. Thereby, as seen on figure 2, the air intake 31 benefits from the higher air pressure in this aft area 24 of the tailcone, while the exhaust of the exhaust gases from the engine is facilitated by the lower pressure of the forward area 23.

The exhaust 32 comprises guide vanes 40. The guide vanes 40 are adapted to guide the exhaust gases. Providing the exhaust 32 with guide vanes 40 may allow to place the exhaust 32 closer to the air intake 31, either longitudinally or angularly around the longitudinal axis 39. Indeed the exhaust gases may be directed, thanks to the guide vanes 40 towards a direction opposite the air intake 31. The guide vanes, may also ensure a higher laminarity of the exhaust gases flow towards the atmosphere.

In order to facilitate the gas exhaust through the exhaust 32, and to minimize the energy consumption of the engine, the inventors have determined that the curves and length of the exhaust conduct 34 may be minimized. The inventors have thus determined that some embodiments may benefit from an inclination between a longitudinal axis 38 of the engine 30 and the longitudinal axis 39 of at least 10 degrees. In some embodiments this tilting angle may be of more than 13 degrees, for example up to about 25 degrees. In the embodiment shown in figures 3a and 4, the tilting angle between a longitudinal axis 38 of the engine 30 and the longitudinal axis 39 of the aircraft is about 20 degrees. This is more than the angle usually found between the longitudinal axis 38 of an auxiliary power unit 30 and the longitudinal axis 39 of the aircraft, as can be seen on figure 1, which is usually of about 6 to 8 degrees.

As shown in the embodiments of figures 3a, 3b, 4 and 5, the invention allows for an aerodynamic tail cone 37 to form the fuselage's rear end 17. This tailcone 37 has no other constraint than being aerodynamic. Thereby, the aerodynamics of the aircraft may be improved and its fuel burn minimized.

The embodiment of figure 3b only differs from the embodiment of figures 3a and 4, in that the scoop 35 is absent and replaced by a flap 36. While the scoop 35 of the embodiment of figures 3a and 4 extends toward outside the fuselage's skin 15 to scoop air towards the intake conduct 33, the flap 36 of the embodiment of figure 3b opens towards the inside of the intake conduct 33 so as to minimize the drag inducing by the drawing of air flowing around the fuselage 14.

Both the scoop 35 and the flap 36 may be actuated between an open position (respectively outward and inward) in which they allow air to be drawn from the atmosphere by the engine 30, and a closed position in which they close the opening formed by the air intake 31 in the fuselage's skin 15. Thereby, when the engine is switched off, the drag of the air intake is minimized or null.

In figure 5, another embodiment is represented. This embodiment is similar to that of figures 3a and 4, with an air intake on the port side of the rear fuselage section and a tailcone 37. However it differs in that the exhaust 32 is placed on a lower side of the rear fuselage section. In order to facilitate the gas exhaust through the exhaust 32, and to minimize the energy consumption of the engine 30, the engine is tilted with its front end higher than its rear end. The tilting angle between a longitudinal axis 38 of the engine 30 and a longitudinal axis 39 of the aircraft is of opposite sign compared to the tilting angle formed between the same axes in the embodiment of figures 3a and 4.

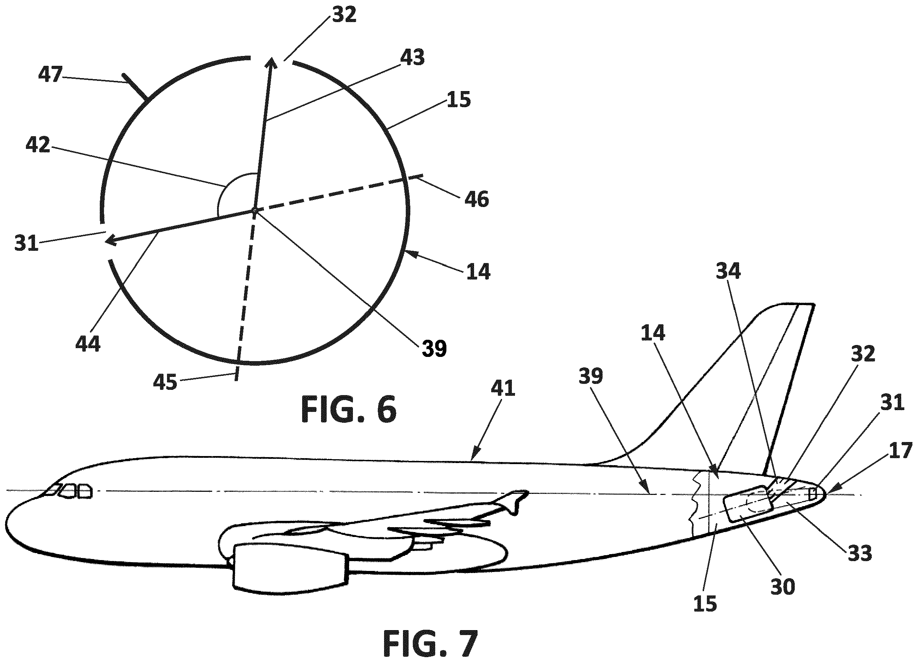

Figure 6 represents the angular segregation between the air intake 31 and the exhaust 32 in an embodiment of the invention which may correspond to the embodiment of figure 4.

In this embodiment the fuselage 14, and more particularly the cylindrical outer skin 15 of the rear fuselage section of an aircraft is represented. This fuselage comprises a first opening forming the air intake 31 for the APU 30, and a second opening forming the exhaust 32 of the APU 30. The air intake may still be, as in the embodiment of figure 4 situated longitudinally aft of the exhaust 32.

The longitudinal axis 39 of the aircraft is also represented as a point. One may visualize from this representation the angular segregation between the air intake 31 and the exhaust 32. Indeed an intake vector 44 between a point on the longitudinal axis 39 and a point of the air intake 31 would form a segregating angle 42 with an exhaust vector 43 between a point on the longitudinal axis 39 and a point of the exhaust 32. This segregating angle 42 is of more than 85 degrees on this example, for example of about 95 degrees.

In the same way, an intake plane 46 which would comprise a point of the air intake 31 and the longitudinal axis 39 forms a segregating angle 42 with an exhaust plane 45 which would comprise a point of the exhaust 32 and the longitudinal axis 39.

This angular representation of an embodiment of the invention provides a representation of a feature not represented on the embodiment of figure 4: the aircraft may comprise a physical separator 47 protruding from the fuselage 14. Such physical separator 47 may improve the segregation of air flows between the air intake 31 and the exhaust 32.

In figure 7, an aircraft 41 according to the invention is represented with the rear fuselage section in cross-section. The rear fuselage section of this aircraft corresponds to the embodiment of figure 4. On this figure, one may easily see that the air intake 31 is aft the exhaust 32 in the tailcone, and in particular that the exhaust is not at the aft rear end 17 of the tailcone.

In alternative embodiments not shown in the figures, the intake conduct may have a straight shape, with no curve section, from the air intake to the engine. In such embodiments, in order to minimize the length and weight of the intake conduct, this intake conduct brings air on the same side of the engine as the side of the air intake on the fuselage: for example if the air intake is on a port side, the air conduct brings the air to the port side of the engine.

In alternative embodiments not shown in the figures, the air intake and the exhaust may be on opposite sides, for example: respectively on the port side and on the starboard side of the fuselage, or on the lower side and the upper side of the fuselage.

The invention is not limited to the specific embodiments herein disclosed as examples. The invention also encompasses other embodiments not herein explicitly described, which may comprise various combinations of the features herein described, in particular variations in the geometry and installation of the different elements of the invention, insofar as they fall within the scope of the appended claims.

## Claims

1. Aircraft (41) comprising:
- a fuselage (14) extending along a longitudinal axis (39) from a front end to a rear end (17), said fuselage (14) comprising a skin (15),
- an engine (30):
• comprising an air intake (31) forming an opening in the skin (15),
• comprising an exhaust (32) forming an opening in the skin (15),
• located in a rear fuselage section of the fuselage (14),
**characterized in that** the exhaust (32) is situated ahead of the air intake (31) along the longitudinal direction (39).

2. Aircraft according to claim 1, further **characterized in that** a vector, called exhaust vector (43), between a predetermined point on the longitudinal axis (39) of the aircraft (41) and a point of the exhaust (32) forms a segregating angle (42) of at least 85 degrees with a vector, called intake vector (44), between said predetermined point on the longitudinal axis (39) of the aircraft (41) and a point of the air intake (31).

3. Aircraft according to any of claim 1 or 2, further **characterized in that** a first plane, called exhaust plane (45), comprising the longitudinal axis (39) of the aircraft (41) and a point of the exhaust (32), and a second plane, called intake plane (46), comprising the longitudinal axis (39) of the aircraft and a point of the air intake (31), form a segregating angle (42) of at least 85 degrees with each other.

4. Aircraft according to any of claim 1 to 3, further **characterized in that** the air intake (31) and the exhaust (32) are separated from each other by a physical separator (46) protruding from the fuselage (14).

5. Aircraft according to any of claim 1 to 4, further **characterized in that** the air intake (31) opens on a lateral side of the rear fuselage section.

6. Aircraft according to any of claim 1 to 5, further **characterized in that** the exhaust (32) opens on an upper side or a lower side of the rear fuselage section.

7. Aircraft according to any of claim 1 to 6, further **characterized in that** the exhaust (32) comprises vanes (40) adapted to guide exhaust gases towards the atmosphere.

8. Aircraft according to any of claim 1 to 7, further **characterized in that** the engine (30) is an auxiliary power unit.

9. Aircraft according to claim 8, further **characterized in that** the auxiliary power unit (30) has a longitudinal axis (38), and that this longitudinal axis (38) forms a tilting angle of at least 10 degrees with a longitudinal axis (39) of the aircraft.

10. Aircraft according to any of claim 8 or 9, further **characterized in that** the front end of the auxiliary power unit (30) is placed higher than a rear end of the auxiliary power unit.

11. Aircraft according to one of claim 1 to 10, further **characterized in that** the rear fuselage section rear end (17) is closed.

12. Aircraft according to one of claim 1 to 11, further **characterized in that** it comprises an intake conduct (33) between the air intake (31) and the engine (30), and that said intake conduct (33) comprises at least one portion forming a U-shape.

## Patentansprüche

1. Flugzeug (41), umfassend:
- einen Rumpf (14), der sich entlang einer Längsachse (39) von einem vorderen Ende zu einem hinteren Ende (17) erstreckt, wobei der Rumpf (14) eine Haut (15) umfasst,
- ein Triebwerk (30):
• umfassend einen Lufteinlass (31), der eine Öffnung in der Haut bildet (15),
• umfassend einen Auspuff (32), der eine Öffnung in der Haut (15) bildet,
• in einem hinteren Rumpfabschnitt des Rumpfes (14) angeordnet,
**dadurch gekennzeichnet, dass** der Auspuff (32) in Längsrichtung (39) vor dem Lufteinlass (31) angeordnet ist.

2. Flugzeug nach Anspruch 1, ferner **dadurch gekennzeichnet, dass** ein als Auspuffvektor (43) bezeichneter Vektor zwischen einem vorbestimmten Punkt auf der Längsachse (39) des Flugzeugs (41) und einem Punkt des Auspuffs (32) mit einem als Einlassvektor (44) bezeichneten Vektor zwischen dem vorbestimmten Punkt auf der Längsachse (39) des Flugzeugs (41) und einem Punkt des Lufteinlasses (31) einen Trennungswinkel (42) von mindestens 85 Grad bildet.

3. Flugzeug nach einem des Anspruchs 1 oder 2, ferner **dadurch gekennzeichnet, dass** eine als Auspuffebene (45) bezeichnete erste Ebene, die die Längsachse (39) des Flugzeugs (41) und einen Punkt des Auspuffs (32) umfasst, und eine als Einlassebene (46) bezeichnete zweite Ebene, die die Längsachse (39) des Flugzeugs und einen Punkt des Lufteinlasses (31) umfasst, einen Trennungswinkel (42) von mindestens 85 Grad miteinander bilden.

4. Flugzeug nach einem der Ansprüche 1 bis 3, ferner **dadurch gekennzeichnet, dass** der Lufteinlass (31) und der Auspuff (32) durch einen aus dem Rumpf (14) herausragenden physischen Separator (46) voneinander getrennt sind.

5. Flugzeug nach einem der Ansprüche 1 bis 4, ferner **dadurch gekennzeichnet, dass** der Lufteinlass (31) an einer Lateralseite des hinteren Rumpfabschnitts mündet.

6. Flugzeug nach einem der Ansprüche 1 bis 5, ferner **dadurch gekennzeichnet, dass** der Auspuff (32) an einer Oberseite oder einer Unterseite des hinteren Rumpfabschnitts mündet.

7. Flugzeug nach einem der Ansprüche 1 bis 6, ferner **dadurch gekennzeichnet, dass** der Auspuff (32) Schaufeln (40) umfasst, die dazu ausgebildet sind, Abgase in die Atmosphäre zu leiten.

8. Flugzeug nach einem der Ansprüche 1 bis 7, ferner **dadurch gekennzeichnet, dass** das Triebwerk (30) ein Hilfsaggregat ist.

9. Flugzeug nach Anspruch 8, ferner **dadurch gekennzeichnet, dass** das Hilfsaggregat (30) eine Längsachse (38) aufweist, und dass diese Längsachse (38) mit einer Längsachse (39) des Flugzeugs einen Kippwinkel von mindestens 10 Grad bildet.

10. Flugzeug nach einem der Ansprüche 8 oder 9, ferner **dadurch gekennzeichnet, dass** das vordere Ende des Hilfsaggregats (30) höher als ein hinteres Ende des Hilfsaggregats angeordnet ist.

11. Flugzeug nach einem der Ansprüche 1 bis 10, ferner **dadurch gekennzeichnet, dass** das hintere Ende des Rumpfabschnitts (17) geschlossen ist.

12. Flugzeug nach einem der Ansprüche 1 bis 11, ferner **dadurch gekennzeichnet, dass** es eine Ansaugleitung (33) zwischen dem Lufteinlass (31) und dem Triebwerk (30) umfasst, und dass die Ansaugleitung (33) mindestens einen Abschnitt umfasst, der eine U-Form bildet.

## Revendications

1. Aéronef (41), comprenant :
- un fuselage (14) s'étendant le long d'un axe longitudinal (39) d'une extrémité avant à une extrémité arrière (17), ledit fuselage (14) comprenant un revêtement (15),
- un moteur (30) :
• comprenant une admission d'air (31) formant une ouverture dans le revêtement (15),
• comprenant un échappement (32) formant une ouverture dans le revêtement (15),
• situé dans une section de fuselage arrière du fuselage (14),
**caractérisé en ce que** l'échappement (32) est situé en avant de l'admission d'air (31) dans la direction longitudinale (39).

2. Aéronef selon la revendication 1, **caractérisé en outre en ce qu'**un vecteur, appelé vecteur d'échappement (43), entre un point prédéterminé sur l'axe longitudinal (39) de l'aéronef (41) et un point de l'échappement (32) forme un angle de séparation (42) d'au moins 85 degrés avec un vecteur, appelé vecteur d'admission (44), entre ledit point prédéterminé sur l'axe longitudinal (39) de l'aéronef (41) et un point de l'admission d'air (31).

3. Aéronef selon la revendication 1 ou 2, **caractérisé en outre en ce qu'**un premier plan, appelé plan d'échappement (45), comprenant l'axe longitudinal (39) de l'aéronef (41) et un point de l'échappement (32), et un second plan, appelé plan d'admission (46), comprenant l'axe longitudinal (39) de l'aéronef et un point de l'admission d'air (31), forment un angle de séparation (42) d'au moins 85 degrés l'un par rapport à l'autre.

4. Aéronef selon l'une des revendications 1 à 3, **caractérisé en outre en ce que** l'admission d'air (31) et l'échappement (32) sont séparés l'un de l'autre par un séparateur physique (46) faisant saillie depuis le fuselage (14).

5. Aéronef selon l'une des revendications 1 à 4, **caractérisé en outre en ce que** l'admission d'air (31) s'ouvre sur un côté latéral de la section de fuselage arrière.

6. Aéronef selon l'une des revendications 1 à 5, **caractérisé en outre en ce que** l'échappement (32) s'ouvre sur un côté supérieur ou un côté inférieur de la section de fuselage arrière.

7. Aéronef selon l'une des revendications 1 à 6, **caractérisé en outre en ce que** l'échappement (32) comprend des aubes (40) conçues pour guider les gaz d'échappement vers l'atmosphère.

8. Aéronef selon l'une des revendications 1 à 7, **caractérisé en outre en ce que** le moteur (30) est une unité d'alimentation auxiliaire.

9. Aéronef selon la revendication 8, **caractérisé en outre en ce que** l'unité d'alimentation auxiliaire (30) a un axe longitudinal (38), et **en ce que** cet axe longitudinal (38) forme un angle d'inclinaison d'au moins 10 degrés avec un axe longitudinal (39) de l'aéronef.

10. Aéronef selon l'une des revendications 8 ou 9, **caractérisé en outre en ce que** l'extrémité avant de l'unité d'alimentation auxiliaire (30) est placée plus haut qu'une extrémité arrière de l'unité d'alimentation auxiliaire.

11. Aéronef selon l'une des revendications 1 à 10, **caractérisé en outre en ce que** l'extrémité arrière (17) de la section de fuselage arrière est fermée.

12. Aéronef selon l'une des revendications 1 à 11, **caractérisé en outre en ce qu'**il comprend un conduit d'admission (33) entre l'admission d'air (31) et le moteur (30), et **en ce que** ledit conduit d'admission (33) comprend au moins une partie formant un U.
